Europäisches Patentamt

European Patent Office

Office européen des brevets

(19)

(11) Publication number: **0 393 693**
**A2**

(12) **EUROPEAN PATENT APPLICATION**

(21) Application number: **90107511.9**

(22) Date of filing: **20.04.90**

(51) Int. Cl.5: **C10M 171/00, C08F 265/04, C08F 2/08, //(C08F265/04, 220:06),C10N40:00,C10N70:00**

(30) Priority: **21.04.89 US 341441**

(43) Date of publication of application:
**24.10.90 Bulletin 90/43**

(84) Designated Contracting States:
**DE FR GB SE**

(71) Applicant: **HERCULES INCORPORATED**
**Hercules Plaza**
**Wilmington Delaware 19894(US)**

(72) Inventor: **Ahmed, Syed M.**
**4912 S. Tupelo Turn**
**Wilmington, Delaware 19808(US)**

(74) Representative: **Lederer, Franz, Dr. et al**
**Lederer, Keller & Riederer, Patentanwälte,**
**Lucile-Grahn-Strasse 22**
**D-8000 München 80(DE)**

(54) **Electrorheological fluids.**

(57) Disclosed is a method for making electroreological fluids in which a monomer is dissolved in an electrically non-conducting fluid, the monomer is polymerized in the presence of a steric stabilizer that has a strong affinity for the particle surface to produce polymeric solid particles dispersed in the fluid, and a polar liquid is then added and becomes absorbed in the surfaces of the solid particles.

EP 0 393 693 A2

## ELECTRORHEOLOGICAL FLUIDS

This invention relates to a method for making electrorheological fluids in which polymeric solid particles with a polar liquid absorbed in their surfaces are dispersed in an electrically non-conducting fluid.

Electrorheological (ER) fluids (also known as electroviscous fluids) are colloidal dispersions of polymeric particles in a low conductivity continuous medium that show a rapid increase in apparent viscosity of several or more orders of magnitude when exposed to an electric field, with typical response times being on the order of milliseconds. The increase is usually completely reversible, so that the compositions revert to their initial (zero-field) viscosity upon removal of the electric field.

The ability of ER fluids to respond rapidly to electrical signals allows devices using ER fluids to replace standard electromechanical elements. This greatly increases the number of repetitions a mechanical device can perform. Therefore, ER fluids offer important advantages in a variety of mechanical systems, particularly those that require a rapid response interface between electronic controls and mechanical devices.

One commercial application of such fluids is in electromechanical clutches in which the fluid is disposed between the surfaces of two electrically conductive members, across which an electric potential can be applied. The fluid responds to the application of the electric potential by instantaneously and reversibly changing its apparent bulk viscosity and yield stress and in sufficiently strong fields, the fluid thickens to a solid or semi-solid condition that transmits torque between the surfaces of the clutch members. Other applications in which ER fluids can be used include fluid filled engine mounts, high speed valves with no moving parts and the interface between electronic and mechanical parts of a machine.

Typically, an ER fluid consists of four components: continuous phase, a particulate material, a polar liquid that is normally adsorbed in the surface of the particulate material, and a stabilizer. The particulate material and polar liquid constitute a dispersed phase. Each of the four components can be one material or a mixture.

The continuous phase or vehicle is usually a non-polar liquid with a low dielectric constant and a high breakdown strength, such as a mineral oil, a silicone oil or an aliphatic hydrocarbons. The stability, zero-field viscosity, and density of the vehicle play an important role in the performance of ER fluids.

A variety of materials including starch, silica-gel, and hydrophilic synthetic polymers are conventionally used as the particulate material. The nonpolar dielectric fluid should have a permittivity less than that of the particles to facilitate the polarization of the particles. Conductivity, permittivity, particle size, and hydrophilicity of the particulate material are variables that may affect the performance of an ER fluid. The particle porosity and the characteristics of the adsorbed polar liquid component (often referred to as a "dopant") are also important factors.

The polar liquid component in ER fluids is usually water, but it may be an alcohol or other polar liquid. It may facilitate polarization of the particles, to create attractive forces between the particles, and additionally make the surface of the particles wet and sticky, thus facilitating the formation of chains of particles under the applied electric potential.

Suspension stabilizers such as surface active agents are often used to prevent the particles from coagulating and settling, or to increase the electrorheological response of the fluid, or both.

It is known, for instance from U.S. patents 4,033,892 and 4,129,513 and British Patent 1,570,234, to make particulate material by first polymerizing a monomer to form a polymer (in these references, containing acid groups) recovering bulk polymer from the polymerization medium, grinding it to particles having the desired size and a density not greater than 1.8, adding the polar liquid, and finally dispersing the polymer particles in a continuous phase liquid that contains a stabilizer.

The density limitation reflects the problem of particle sedimentation encountered in known methods, which has been only partially resolved by matching the density of the particles with the density of the dispersion medium. However, the density of the medium is more sensitive to changes in temperature than is the density of the dispersed polymer, and consequently, phase separation may occur with a change in temperature.

There is a need for a method for making electroreological fluids that eliminates the grinding step, offers better control over polymer particle size and particle size distributions in a low conductivity medium, and avoids the density-matching problem.

According to the invention, a method for making electrorheological fluids in which polymeric solid particles with a polar liquid absorbed in their surfaces are dispersed in a vehicle consisting of an electrically non-conducting fluid is characterized in that a monomer is dissolved in the vehicle, the particles of polymer are produced by polymerizing the monomer in the vehicle in the presence of a steric stabilizer that has a strong affinity for the particle surface, and the polar liquid is then added.

ER fluids prepared in this manner eliminate the problems associated with the recovery, drying, and subsequent grinding of the polymer to produce the polymeric solid particles in the known procedures. The particle size obtained by the polymerization step of the method according to the invention can be accurately controlled, and adjustment of the level of polymer in the vehicle is facilitated.

Preferably, the size of the particles is not more than 25 microns, more preferably not more than 10 microns, and most preferably less than 1 micron, in diameter. The smaller sizes provide more stable dispersions, since the rate of sedimentation of the dispersed phase particles follows Stokes' law, which shows that the stability against sedimentation is directly dependent upon the square of the particle diameter and the density difference between the particles and the medium and inversely dependent upon the viscosity of the medium. The organic medium used for polymerization is usually not as dense as the dispersed phase polymer, and may have a relatively low viscosity. Therefore, the particle size is an important factor in avoiding sedimentation during storage.

Since the polymerization of the monomers of this invention is a dispersion polymerization, in which the monomeric starting material is soluble in the polymerization medium (although the resulting polymers are not), the initial mixture is homogeneous.

Preferably, a difunctional or trifunctional monomer is present during the polymerization to serve as a crosslinking agent. It is preferably a polyfunctional vinylidene monomer containing at least two terminal $CH_2$ groups, including for example, butadiene, isoprene, divinyl benzene, divinyl naphthalene, acrylates and the like. Preferably the polymerization mixtures contain up to about 5% by weight of the cross-linking monomer, based on the total monomer present, more preferably, about 0.1 to 2.0 weight percent.

Among the monomers that may be polymerized to form the hydrophobic particles dispersed in the medium are acrylates such as ethyl acrylate, propyl acrylate, isopropyl acrylate, butyl acrylate, isobutyl acrylate, 2-ethylhexyl acrylate, nonyl acrylate, and hexyl acrylate; and methacrylates such as methyl methacrylate, methyl ethacrylate, ethyl methacrylate, octyl acrylate, heptyl acrylate, octyl methacrylate, isopropyl methacrylate and n-hexyl methacrylate. Higher alkyl acrylic esters that may be polymerized to form the hydro phobic particles are decyl acrylate, isodecyl methacrylate, lauryl acrylate, stearyl acrylate, behenyl acrylate and myristyl acrylate and the corresponding methacrylates. Mixtures of two or three or more long chain acrylic esters may be copolymerized with one of the carboxylic monomers. One typical useful class of copolymers comprises the methacrylates in which the alkyl group contains 10 to 18 carbon atoms. Other monomers that can be used include styrenes (including alpha-methyl styrene), vinyl acetate, vinyl toluene, vinyl chloride, and acrylonitrile.

The electrically non-conducting fluid vehicle may be selected from any one of a large number of well known electrically insulating hydrophobic liquids in which the monomer selected dissolves. These include transformer oils, transformer insulating fluids, silicone oils, mineral oil, aliphatic hydrocarbons such as paraffin oils, halogenated aromatic liquids and halogenated paraffins. Known transformer oils are liquids having characteristics properties of both electrical and thermal insulation. The preferred electrically non-conducting fluid vehicle is mineral oil, a colorless, petroleum liquid product normally containing a major proportion of liquid aliphatic hydrocarbon materials, and known as a naturally occurring transformer oil. Refined mineral oils have a relatively low viscosity and high chemical stability. The specific gravity of mineral oil normally ranges from about 0.76 to about 0.79, with a boiling range from about 150° C. to about 200° C. While the flash point is normally above about 40° C., for safety reasons the flash point should preferably be above about 60° C. A mineral oil having a composition of 0 to less than 5 percent aromatics, about 40 to about 80 percent paraffins and about 15 to about 60 percent naphtha, having a flash point above 60° C. is a preferred vehicle.

While the proportion of mineral oil used may vary from 99% weight percent of mineral oil and 1 weight percent of monomer up to about 50 weight percent of mineral oil and 50 weight percent of monomer, the proportion of mineral oil preferably exceeds the amount of the monomers to be polymerized, and more preferably a concentration of about 15 to 40 weight percent of monomer is employed, most preferably, 15 to 25 weight percent of monomer.

Dispersions in organic media are inherently less stable than those in aqueous systems, and thus require a steric stabilizer to overcome the attractive interaction between these particles and prevent rapid coagulation. In preferred embodiments of the invention, a polymeric stabilizer is used for this to provide a repulsive steric barrier at the interface. Suitable polymeric stabilizers include homopolymers and copolymers that have a strong affinity for the particle surface, including random copolymers and block and graft copolymers having one segment that is soluble in the polymerization medium and the another that has an affinity towards the dispersed phase polymer. The comonomeric surfactants may be soluble in the continuous phase.

In the case of a block copolymer stabilizer, one block forms an anchor group that is nominally insoluble

3

in the fluid media and attaches to the particle surface. The other block is soluble in the fluid, will generally be very long and provides the steric stabilization barrier. In the case of graft copolymers, a long polymeric backbone is formed by one of the copolymers and forms the anchor for attaching the molecule to the particle, while side chains of the other copolymer, attached at intervals along its length, are solvated by the fluid media.

A homopolymer can serve as a steric stabilizer if it is essentially soluble in the fluid but has some functionality with strong affinity for the particle surface. Similarly, a random copolymer can also be used as a steric stabilizer.

Typical polymers that can be used as preferred stabilizers include homopolymers such as poly(methyl methacrylate) (PMMA), poly(vinyl acetate) (PVA), poly(12 hydroxystearic acid) (PSA) or poly(lauryl methacrylate) (PLM). The following graft or block copolymers are preferably used when the dispersion polymer is poly(methyl methacrylate) or polystyrene: PMMA/PSA, PVA/PSA, PMMA/PLM or styrene-butadiene copolymer. When the dispersion polymer is poly(vinyl acetate), the stabilizing block or graft copolymer is preferably PVA/PSA or PMMA/PSA.

It is well known that the particle size and particle size distribution of the polymeric particles produced by dispersion polymerization can be controlled by varying the concentration of the monomer as well as the concentrations of the initiator and stabilizer. The degree of solvency of the polymerization medium and the polymerization temperature also have a strong effect on the particle size and the particle size distribution of the resulting polymeric dispersions. It is also known that, for the polymers that are soluble in their own monomers, the unreacted monomer keeps the growing radicals in the solution form for a much longer period compared to those monomers that do not act as a solvent for the resulting polymers. In such systems, the concentration of the monomer is very important, as a determinant not only of the particle size, but also of the stability of the dispersions.

The polar liquid may be any liquid that is capable of wetting the particles with which it is used, as well as having a polar group, such as ethanol, dimethylsulfoxide or N-methylformamide. The skilled man can easily determine, with a minimum of experimentation, what other polar liquids give a good ER response with the particular monomer that is used. Preferably, the polar liquid is ethanol or dimethylsulfoxide, and the proportion of polar liquid is at least 8%, more preferably 8 to 14%.

In the examples that follow, the following procedure was followed (except when otherwise indicated) in measuring the response of ER fluids produced according to this invention. A Rheometrics System 4 Rheometer (Rheometrics, Inc., Princeton, N.J.) was modified to facilitate the application of an applied electric field and was found to be a quick and reliable way of measuring the response of ER fluids.

Accordingly, the fluid option assembly (cup and bob) of the Rheometer was modified to facilitate the application of a DC potential across a 2 mm gap between the cup and bob. The test sample was held between two coaxial cylinders (the cup and bob) having a total surface area of 82.9 cm$^2$. The bob has a radius of 24 mm and is 55 mm in length and is attached to the sensitive transducer which can measure a maximum torque of 100 gm-cm. The cup has an inner radius of 26 mm allowing the 2 mm gap. It is held by a motor that can perform both rotational and oscillatory motions. The electric potential is introduced into the bob by way of a brush device. The torque measurement is not attenuated by the incorporation of the voltage device. An insulator is placed between the transducer shaft and the electrified bob to shield the transducer electronics from the high voltage. The motor shaft and the cup are grounded. A Fluke voltage generator is used as the high voltage source capable of generating a maximum voltage of 10,000V, DC. Ampmeters are used to detect the current.

A shield is placed in front of the rheometer to screen high voltage from the operator during a normal run. A standard ER test is the voltage screen experiment. The ER fluid is subjected to oscillatory shear flow at 5 rad/sec and 15% strain initially for 5 minutes. Then a voltage is turned on while the fluid is being sheared. After 15 minutes (or a shorter time, e.g. 2-5 minutes), the voltage is turned off for a several minutes. This process is repeated up to a limit of 2000V with the voltage increased in each repetition. Also it is specified that experiments be discontinued if a maximum of 2500 micro Amps is drawn by the fluid. In the Tables, included herein, Electric Field is expressed in units of kilovolts per millimeter (KV/mm). The changes in the complex viscosity, storage modulus G$'$ and the loss modulus G$''$ were recorded for the electric fields of varying strength. In the tables, the viscosity is expressed in units of poise.

The ER experiments can be done at different temperatures. Below room temperature, the temperature control bath is used with the coolant being isopropyl alcohol, IPA. An external thermocouple probe immersed as close to the cup as possible is used to monitor the ER fluid temperature. For high temperatures, a Haake bath with silicone oil is used.

Changes in complex viscosity were studied as a function of applied field strength. As expected, the magnitude of the ER effect (change in the complex viscosity) increases with increasing field strength. The fluid behaves like a liquid in the unenergized state. With increased electric field strength the ER fluid goes through a viscoelastic to an elastic solid-like material. Upon termination of the applied potential, the fluid resumed its original liquid behavior.

The first step in preparing the ER fluid is to synthesize polymethylmethacrylate (PMMA) particles in mineral oil according to the procedure in Example 1. The mineral oil had a room temperature viscosity of 90 cp, a density of 0.87 gm/cc and a dielectric constant at 1 kHz of 1.8. Since the hydrophobic polymeric particles produced according to Example 1 cannot be wetted with water, the polar liquid selected for doping was ethanol, dimethylsulfoxide or n-methylformamide. The dopant was directly added to the dispersion with stirring to make the final ER fluid. Good ER response was observed when these particles were doped with one of these polar liquids at a concentration of from about 8 to 15% based on the polymer weight. For example, a fluid doped with 14% ethanol (based on polymer) at 40% solids showed a 35-fold increase in the viscosity at 1 KV/mm field strength. The current densities at 1 KV/mm were less than 5 micro amps/sq. cm.

EXAMPLE 1

DISPERSION POLYMERIZATION OF METHYLMETHACRYLATE

Dispersion polymerization of methylmethacrylate (MMA) in mineral oil was carried out using the ingredients shown in Table 1. This monomer is completely soluble in mineral oil and the resulting polymer is insoluble in this medium. In a typical experiment the stabilizer is first dissolved in mineral oil and charged to a jacketed glass reactor equipped with a stirrer, thermometer, condenser and nitrogen sparging tube and heated to the polymerization temperature (80°C.) while sparging with nitrogen. In a separate beaker, initiator and crosslinking agent are added and dissolved in the monomer and then charged to the reactor held at the polymerization temperature. The monomer is then allowed to polymerize for about 16 hours. Addition of cold monomer to the mineral oil mixture brings the temperature down to about 65°C. Once the temperature of the reaction mixture returns to 80°C. in about 5 minutes after addition of monomer, a strong exotherm occurs and the monomer polymerizes adiabatically for a short time with temperatures reaching as high as 140°C. for several minutes. The polymerization reaction is then continued for several hours at 80°C. The conversion to polymer at the end of the exotherm is usually more than 95% and at the end of the run is usually greater than 99.5% The time for reaching the end product can be shortened by adding additional initiator at the end of the exotherm. The whole process can be completed within two hours. (The exothermic rise in temperature could have been be controlled by an external cooling liquid).

The particle size of the dispersions prepared using the ingredients shown in Table 1 is usually in the range of about 0.5-0.8 micron, with a relatively narrow distribution of particle size.

TABLE 1

| Polymerization Recipe | | | |
|---|---|---|---|
| | | | Parts/100 |
| Mineral Oil | = 261 gms | (300 ml) | 55.3 |
| Stabilizer Acryloid 956 * | = 20 gms | | 4.3 |
| Monomer Methylmethacrylate | = 187 gms | (200 ml) | 39.7 |
| Benzoyl Peroxide | = 2.5 gms | | 0.5 |
| TEGDMA ** | = 1.1 gms | | 0.2 |
| Total | 471.6 | | 100.0 |

*Produced by Rohm and Haas.
**Triethylene glycol dimethacrylate (crosslinking agent).

5

## EXAMPLE 2

The stability of the fluids prepared according to this procedure was excellent. No phase separation of the phases was observed over several months of storage time. A small sample of this fluid was tested in a centrifuge for stability at relative centrifugal force of 92g, 369g, 830g and 2310g. The results of this test are given in Table 2. There was no phase separation after two hours of centrifugation at 92g, 1 mm separation after 2 hours at 369g, 2 mm separation at the end of two hours at 830g and 4 mm separation at the end of 4 hrs. at 2310g. In these experiments, a complete separation would have resulted in a 30 mm reading.

TABLE 2

| Stability Data | | |
|---|---|---|
| Relative Centrifugal Force | Time | Separation |
| 1 g | Several months | none |
| 92 g | 2 hrs. | none |
| 369 g | 1/2 hr. | none |
| | 1 hr. | 1 mm |
| | 2 hrs. | 1 mm |
| 830 g | 2 hrs. | 2 mm |
| 2310 g | 2 hrs. | 4 mm |

## EXAMPLES 3 and 4

ER performance evaluation of the fluids produced in Example 1 was carried out according to the procedure discussed earlier. Ethanol is the dopant added to these fluids. Tables 3 and 4 summarize the performance data in terms of absolute viscosities as a function of applied field strength, dopant concentration and the concentration of the dispersed phase polymer, for non-crosslinked and crosslinked PMMA based fluids respectively. In Example 3 the polymer is polymethylmethacrylate and in Example 4 the polymer is polymethylmethacrylate crosslinked with divinyl benzene.

6

TABLE 3

| ER Performance of Ethanol Doped PMMA Based Fluids | | | | | | | | |
|---|---|---|---|---|---|---|---|---|
| | | | | Viscosity (poise) | | | | |
| Example No. | Polymer % | % Ethanol | Field Strength KV/mm | 0 | 0.25 | 0.50 | 0.75 | 1.00 |
| 3A | 40 | 0 | | 4.1 | 5.2 | 5.9 | - | - |
| 3B | 40 | 1.55 | | 4 | 5 | 6.1 | - | - |
| 3C | 40 | 3.06 | | 3.9 | 5 | 6.3 | - | - |
| 3D | 40 | 5.94 | | 6.4 | 27 | 80 | 150 | 22 |
| 3E | 40 | 7.32 | | 5.5 | 36 | 85 | - | 185 |
| 3F | 30 | 4.52 | | 3.6 | 11 | 32 | 61 | 93 |
| 3G | 20 | 3.06 | | 2.1 | 6 | 20 | 40 | 60 |
| 3H | 10 | 1.55 | | 1.4 | 1.6 | 1.6 | 1.4 | - |
| (a) Based on total dispersion. | | | | | | | | |

TABLE 4

| ER Performance of Ethanol Doped Crosslinked PMMA Based Fluids | | | | | | | | |
|---|---|---|---|---|---|---|---|---|
| | | | | Viscosity (poise) | | | | |
| Example No. | % Polymer | % EtOH* | Field Strength KV/mm | 0 | 0.25 | 0.5 | 0.75 | 1.00 |
| 4A | 40 | 0 | | - | - | - | - | - |
| 4B | 40 | 1.55 | | 5.4 | 6.6 | 7.7 | 8.2 | 8.2 |
| 4C | 40 | 3.06 | | 5.5 | 5.3 | 7.8 | 8.7 | 9.0 |
| 4D | 40 | 5.94 | | 6.0 | 30 | 80 | 140 | 215 |
| 4E | 40 | 7.32 | | GEL | | | | |
| 4F | 30 | 4.52 | | 3.1 | 9.5 | 32 | 66 | 100 |
| 4G | 20 | 3.06 | | 2.2 | 5.4 | 18 | 25 | 33 |
| 4H | 10 | 1.55 | | 1.15 | 2.3 | 7.2 | 14 | 12 |
| * Based on total dispersion. | | | | | | | | |

.The zero-field viscosities of the fluids of Examples 3 and 4 are dependent upon the added alcohol level. In the case of the non-crosslinked polymer, there is no change in the viscosity up to about 8% (based on polymer weight) added alcohol. However, this is followed by a sharp increase in the viscosity up to about 14% by weight, based on the polymer, of the added alcohol. Further increase in the level of alcohol appeared to reduce the viscosity. The zero-field viscosities of the crosslinked PMMA fluids is higher to start with, and with added alcohol the viscosity of the dispersion gradually increases. At over 14% of added alcohol the dispersion becomes a gel.

The ER performance of the two types of fluids is shown in Tables 3 and 4, confirming the negligible response up to about 8% added alcohol for both crosslinked as well as uncrosslinked PMMA, and the improvement in ER response when the alcohol level was increased above 8%. At the optimum alcohol level (about 14%) an increase of about 35-fold in the viscosity levels was observed in both fluids at a field strength of 1 KV/mm.

In general, the ER response increased with increasing polymer concentration. This can be seen in Tables 3 and 4 by comparing those examples with a fixed dopant level of 13.4% ethanol based on polymer.

EP 0 393 693 A2

There was one exception seen in the data where the change in the relative viscosity of the vehicle containing 20% non-crosslinked PPMA was about the same or slightly higher than that of the vehicle containing 30%.

It was also seen that the current draw through these fluids up to 1 KV/mm field strength were extremely low, i.e. less than 5 micro amps/sq. cm.


## EXAMPLE 5

Several other liquids were tested as dopants with the ER fluids prepared in Example 1 at concentrations between 8 and 10% based on polymer. Dimethyl sulfoxide, formamide, N-methylformamide and N-N,dimethylformamide were tested. Of these liquids, only dimethylsulfoxide and N-methylformamide showed good ER response. These results are shown in Table 5.

TABLE 5

| ER Performance of PMMA Based Fluid Doped With Various Polar Liquids | | | | | | | | | |
|---|---|---|---|---|---|---|---|---|---|
| | | | | | Viscosity (poise) | | | | |
| Example No. | % Polymer | Dopant | % BOPMMA* | Field Strength KV/mm | 0 | 0.25 | 0.50 | 0.75 | 1.00 |
| 5A | 40 | Dimethyl sulfoxide | 9.91 | | 3.5 | 18.5 | 67.3 | 150.8 | 130 |
| 5B | 40 | N, methyl formamide | 9.12 | | 1.7 | 10.5 | 40 | 75 | 112 |
| 5C | 40 | N-N, dimethyl formamide | 8.68 | | 1.5 | 2.1 | 2.7 | 3 | 3.2 |
| 5D | 40 | Formamide | 10.15 | | 1.1 | 1.5 | 2.4 | 3.9 | 5.7 |

* Based on concentration of PMMA

## Claims

1. A method for making electroreological fluids in which polymeric solid particles with a polar liquid absorbed in their surfaces are dispersed in a vehicle consisting of an electrically non-conducting fluid is characterized in that a monomer is dissolved in the vehicle, the particles of polymer are produced by polymerizing the monomer in the vehicle in the presence of a steric stabilizer that has a strong affinity for the particle surface, and the polar liquid is then added.

2. A method for making electroreological fluids as claimed in claim 1, further characterized in that the steric stabilizer is a block copolymer in which one segment of the copolymer is soluble in the vehicle and a second segment of the copolymer has a strong affinity for the particle surface.

3. A method for making electroreological fluids as claimed in claim 1 or 2, further characterized in that the steric stabilizer is a homopolymer selected from the group consisting of poly(methyl methacrylate), poly(vinyl acetate), poly(12 hydroxystearic acid and poly(lauryl methacrylate).

4. A method for making electroreological fluids as claimed in claim 1 or 2, further characterized in that the size of the particles is not more than 25 microns in diameter.

5. A method for making electroreological fluids as claimed in claim 4, further characterized in that the size of the particles is not more than 10 microns in diameter.

6. A method for making electroreological fluids as claimed in claim 5, further characterized in that the size of the particles is less than 1 micron in diameter.

7. A method for making electroreological fluids as claimed in any of the preceding claims, further characterized in that a crosslinking monomer is present during the polymerization.

8. A method for making electroreological fluids as claimed in any of the preceding claims, further characterized in that, the vehicle contains up to about 5% by weight of a cross-linking monomer, based on the total monomer present.

8

9. A method for making electroreological fluids as claimed in claim 8, further characterized in that the vehicle contains about 0.1 to 2.0 weight percent of the cross-linking monomer.

10. A method for making electroreological fluids as claimed in any of the preceding claims, further characterized in that the electrically non-conducting fluid is a mineral oil, a silicone oil, a transformer oil or another transformer insulating fluid, a paraffin oil, a halogenated aromatic liquid, or a halogenated paraffin.

11. A method for making electroreological fluids as claimed in any of the preceding claims, further characterized in that the monomer is an acrylate, a methacrylate, vinyl acetate, vinyl chloride or acrylonitrile.

12. A method for making electroreological fluids as claimed in claim 12, further characterized in that the monomer is methyl methacrylate.

13. A method for making electroreological fluids as claimed in any of the preceding claims, further characterized in that the monomer is styrene.

14. A method for making electroreological fluids as claimed in any of the preceding claims, further characterized in that the polar liquid is ethanol, dimethyl sulfoxide, or N-methylformamide.

15. A method for making electroreological fluids as claimed in any of the preceding claims, further characterized in that the concentration of the polar liquid is from 8% to about 14% by weight of the polymer.